# EUROPÄISCHE PATENTANMELDUNG

(11) **EP 0 919 342 A2**
(43) Veröffentlichungstag der Anmeldung: **02.06.1999**
(21) Anmeldenummer: 98121939.7
(22) Anmeldetag: 19.11.1998
(51) Int. Cl.: B27C 1/00, B24B 7/28

(54) **Flächenschleifmaschine**

(30) Priorität: 01.12.1997 DE 19753241
(71) Anmelder: Tagliabue Deutschland Gmbh, 70736 Fellbach (DE)
(72) Erfinder: Schadt, Michael, 71686 Remseck (DE)
(74) Vertreter: Dreiss, Fuhlendorf, Steimle & Becker, Patentanwälte

(57) **Zusammenfassung**

Bei einer Flächenschleifmaschine mit mehreren Schleifaggregaten ist diesem eine Horizontal-Fräseinrichtung vorgeschaltet, über welche das Werkstück an der zu bearbeitenden Oberfläche vorgefräst wird.

## Beschreibung

Die Erfindung betrifft eine Flächenschleifmaschine zur Oberflächenbearbeitung flächiger Werkstücke mit einem Werkstückeinlauf und einem Werkstückauslauf, einem oder mehren dazwischen angeordneten Schleifaggregaten und einem Transportsystem, über welches das Werkstück am oder an den Schleifaggregaten vorbeigeführt wird.

Derartige Flächenschleifmaschinen sind in einer Vielzahl bekannt. Mit diesen Flachenschleifmaschinen wird in der Regel die Oberfläche von Holz- oder Kunststoffwerkstücken geschliffen und dadurch kalibriert oder für einen nachfolgenden Beschichtungsvorgang vorbereitet. Zwar können mit diesen Flächenschleifmaschinen hochwertige Oberflächen hergestellt werden, jedoch sind diese ungeeignet für eine große Spanabnahme.

Der Erfindung liegt daher die Aufgabe zugrunde, eine Flächenschleifmaschine der eingangs genannten Art derart auszugestalten, dass mit dieser auch hohe Spanabnahmen möglich sind.

Diese Aufgabe wird mit einer Flächenschleifmaschine der eingangs genannten Art erfindungsgemäß dadurch gelöst, dass vor dem Werkstückeinlauf eine Horizontal-Fräseinrichtung angeordnet ist, die das Werkstück an der Seite bearbeitet, an welcher es anschließend geschliffen werden soll, und die Fräseinrichtung ein oder mehrere Horizontal-Fräswerkzeuge mit vertikal ausgerichteter Drehachse aufweist.

Mit der erfindungsgemäßen Flächenschleifmaschine können Holz- und Kunststoffwerkstücke mit Arbeitsbreiten von 200 mm bis 3.100 mm vorgefräst und anschließend mittels der Schleifaggregate fertig bearbeitet, d.h. geschliffen werden. Die Fräswerkzeuge sind derart ausgerüstet, dass sie horizontal zur Werkstückoberfläche rotieren, d. h. dass ihre Drehachse orthogonal zur Werkstückoberfläche liegt. Die Drehzahl kann zwischen 1.500 und 20.000 1/min variiert werden und Spanabnahme kann nun bis zu 10 mm betragen. Der Vorschub beträgt dabei nach wie vor 25 m/min, so dass das Werkstück in einem Arbeitsgang von der Horizontal-Fräseinrichtung den Schleifaggregaten zugeführt werden kann.

Ein weiterer Vorteil wird darin gesehen, dass bei einer Beschädigung der Horizontal-Fräseinrichtung, z. B. durch einen Nagel im Werkstück oder durch einen eingewachsenen Stein in einer Holzplatte, nicht die gesamte Fräseinrichtung ausgetauscht werden muss, sondern lediglich das beschädigte Fräswerkzeug. Dies hat den wesentlichen Vorteil, dass die Reparaturkosten drastisch gesenkt werden können, da das beschädigte Fräswerkzeug zum einen wesentlich preiswerter ist wie eine gesamte Fräseinrichtung, zum anderen der Stillstand der Maschine auf ein Minimum reduziert wird, da das beschädigte Fräswerkzeug sehr schnell gegen ein anderes Fräswerkzeug ausgetauscht werden kann. Da die einzelnen Fräswerkzeuge 2 bis 40 Schneiden aufweisen, besteht auch die Möglichkeit, dass lediglich einzelne Schneiden dieses Fräswerkzeugs ersetzt werden. Ein weiterer Vorteil besteht darin, dass lediglich diese einzelnen Schneiden innerhalb eines Fräswerkzeugs zueinander ausgerichtet werden müssen und nicht alle Schneiden der gesamten Fräseinrichtung zueinander. Dies ist z. B. der Fall bei einer über die gesamte Breite des Werkstücks verlaufenden Fräswalze, die an ihrem Umfang die einzelnen Schneiden aufweist. In einem Schadensfall wäre bei diesem Werkzeug die gesamte Fräseinrichtung zu ersetzen und es müssen dann alle Schneiden zueinander ausgerichtet werden.

Ein weiterer Vorteil wird darin gesehen, dass mittels der Horizontal-Fräseinrichtung feine Späne anfallen, die für die Herstellung von Holzbriketts o.dgl. verwendbar sind. Außerdem sind diese Späne relativ weich und dünn, so dass sie als Streumittel z. B. in Hühnerfarmen eingesetzt werden können. Ferner fällt kein Schleifstaub an und die Späne sind frei von Spreiseln. Aufgrund der hohen Schnittgeschwindigkeit der einzelnen Fräswerkzeuge (bis zu 20.000¹/min bei einem Durchmesser von 20 cm) reinigen sich diese selbst von Leim und Schmelzkleber. Die Wendeblattmesser sind z. B. mit Industriediamant beschichtet oder bestehen aus einem Hartmetall oder HSS (Hochgeschwindigkeits-Schnittstahl).

Ein weiterer Vorteil wird darin gesehen, dass aufgrund der Mehrzahl an Fräswerkzeugen jedes einzelne Fräswerkzeug ein geringeres Gewicht aufweist als z. B. eine Fräswalze, so dass bereits hierdurch das Auswechseln der einzelnen Werkzeuge erleichtert wird.

Durch den Fräsbearbeitungsschritt wird die Oberfläche des Werkstücks gesäubert, so dass sich beim anschließenden Schleifvorgang das Schleifband wesentlich weniger mit Leim bzw. Schmelzkleber zusetzt. Außerdem muss mit dem Schleifvorgang wesentlich weniger Material abgenommen werden, so dass die Standzeit des Schleifbandes drastisch erhöht wird.

Ein weiterer Vorteil wird darin gesehen, dass bei gleichem Materialabtrag mit der erfindungsgemäßen Flächenschleifmaschine etwa 50 % an Energie eingespart wird, da mittels der Horizontal-Fräseinrichtung mit relativ wenig Energie ein hoher Materialabtrag erzielt werden kann.

Da die Schneidrichtung bei der Horizontal-Fräseinrichtung in einer Ebene verläuft, entstehen im Gegensatz zum Schleifen, bei dem das Schleifband auf die Oberfläche des Werkstücks gepresst wird, keine Rillen und keine Markierungen.

Mit der erfindungsgemäßen Flächenschleifmaschine können alle Arten von Hölzer und deren Derivate sowie alle Arten von Kunststoffen bearbeitet werden, insbesondere Acrylglas, Verbundstoffe, wie Glasfaserkunststoffe, Polyethylen, Ferrostahl, PE-Schäume, PE-Platten in allen Dichten, Baustoffe wie Porenbeton usw.

Bei einem bevorzugten Ausführungsbeispiel sind bei mehreren Fräswerkzeugen diese in wenigstens zwei quer zur Transportrichtung des Werkstücks verlaufenden, d.h. in Transportrichtung hintereinander angeordneten Linien angeordnet. Auf diese Weise wird die Möglichkeit geschaffen, dass die Arbeitsbereiche der Fräswerkzeuge, d. h. der Flugkreise der Schneiden, sich quer zur Transportrichtung des Werkstücks geringfügig überlappen. Durch diese Maßnahme wird sichergestellt, dass das Werkstück über die gesamte Breite fräsbearbeitet wird, ohne dass Anschlussstellen bzw. Übergänge sichtbar sind.

Bei einem bevorzugten Ausführungsbeispiel sind bei mehreren Fräswerkzeugen diese über einen gemeinsamen Antriebsmotor angetrieben. Es ist jedoch auch denkbar, dass die einzelnen Fräswerkzeuge über separate, insbesondere einzeln ansteuerbare Antriebsmotoren angetrieben werden. Im erstgenannten Falle sind die einzelnen Fräserwellen und der Antriebsmotor über einen oder mehrere Zahnriemen miteinander verbunden und werden in der Regel mit einer konstanten Drehzahl angetrieben. Im zweiten Falle weist jedes Fräswerkzeug seinen eigenen Antriebsmotor auf, der stufenlos von 1.500 bis 20.000 1/min mittels eines Frequenzumformers regelbar ist.

Vorteilhaft ist die Arbeitshöhe eines jeden Fräswerkzeugs separat einstellbar. Auf diese Weise kann z. B. die Arbeitsbreite der Fräseinrichtung an die Breite des Werkstücks angepasst werden (durch Ausheben einzelner Fräswerkzeuge) und es wird die Möglichkeit geschaffen, eine sehr plane Oberfläche herzustellen.

Ein schnelles Auswechseln der Fräswerkzeuge wird dadurch erreicht, dass diese mittels eines Schnellspannsystems mit dem Werkzeugfutter verbunden sind. Außerdem können die Fräswerkzeuge mit einer Umfangsnut z. B. für einen Greifer eines automatischen Wechslers versehen sein.

Eine kostengünstige Variante der Erfindung sieht vor, dass das Werkstück über das bereits vorhandene Transportsystem durch die Fräseinrichtung transportierbar ist.

Um bereits vorhandene Flächenschleifmaschinen mit der erfindungsgemäßen Horizontal-Fräseinrichtung nachrüsten zu können, ist diese als Anbaumodul ausgebildet. Auf diese Weise kann die Arbeitsleistung herkömmlicher Flächenschleifmaschinen erhöht werden.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben wird. Dabei können die in der Zeichnung dargestellten und in den Ansprüchen sowie in der Beschreibung erwähnten Merkmale jeweils einzeln für sich oder in beliebiger Kombination erfindungswesentlich sein.

In der Zeichnung zeigen:
- Figur 1: eine Seitenansicht einer Ausführungsform der erfindungsgemäßen Flächenschleifmaschine;
- Figur 2: eine Draufsicht auf eine Fräseinrichtung;
- Figur 3: eine Seitenansicht der Fräseinrichtung gemäß Figur 2; und
- Figur 4: einen Längsschnitt durch ein Fräswerkzeug.

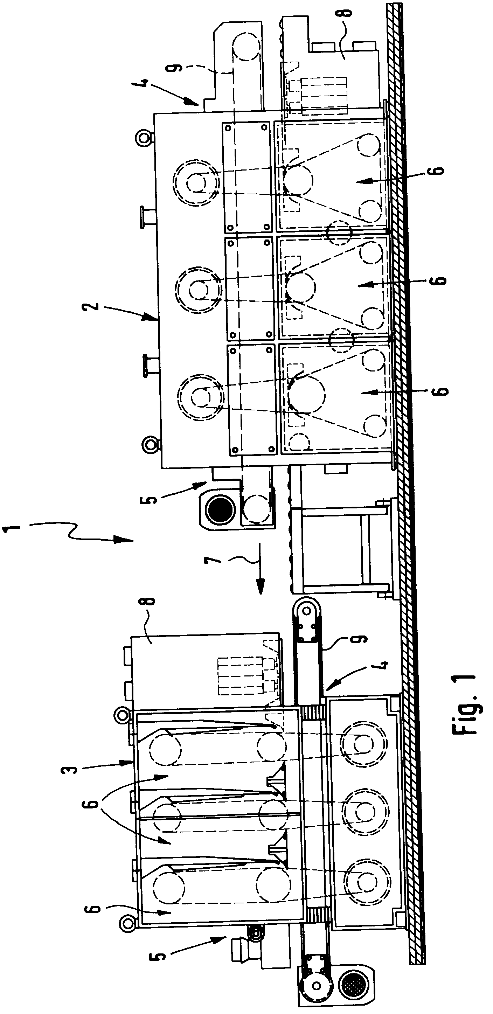

In der Figur 1 ist eine insgesamt mit 1 bezeichnete Flächenschleifmaschine dargestellt, die von einer ersten Schleifstraße 2 zum Bearbeiten der Unterseite eines Werkstücks und einer zweiten Schleifstraße 3 zum Bearbeiten der Oberseite des Werkstücks besteht. Jede Schleifstraße 2 und 3 weist einen Werkstückeinlauf 4 und einen Werkstückauslauf 5 auf. Zwischen dem Werkstückeinlauf 4 und dem Werkstückauslauf 5 befinden sich jeweils drei Schleifaggregate 6, mit denen die Werkstücke vor- und fertiggeschliffen werden.

Jeweils in Transportrichtung (Pfeil 7) vor dem Werkstückeinlauf 4 befindet sich eine Horizontal-Fräseinrichtung 8, die bezüglich des Werkstücks auf der gleichen Seite angeordnet ist wie die Schleifaggregate 6. Die Werkstücke werden mittels eines Transportsystems 9 durch die Horizontalfräseinrichtung 8 sowie an den Schleifaggregaten 6 vorbeigeführt.

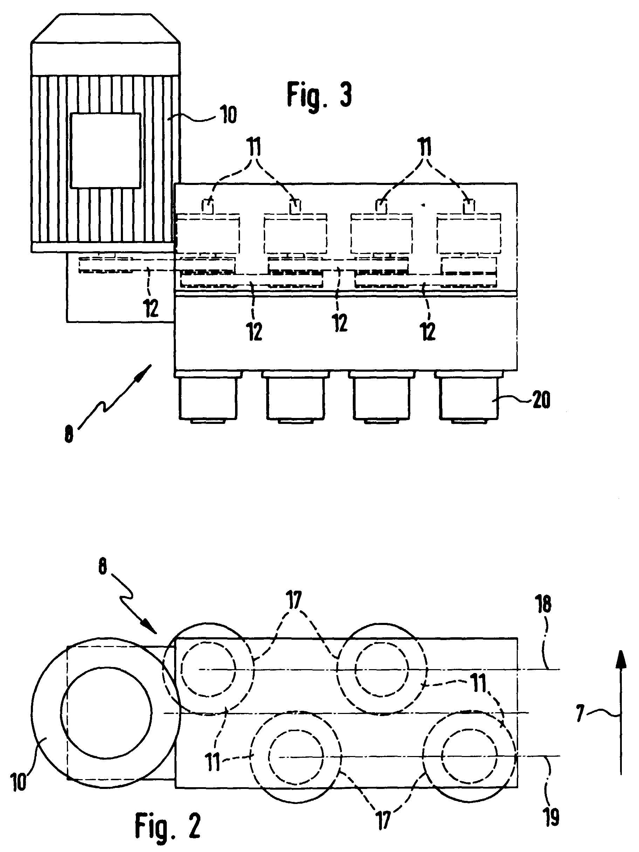

In Figur 2 ist eine Draufsicht auf eine Horizontal/Fräseinrichtung 8 dargestellt. Diese weist einen Antriebsmotor 10 sowie vier Fräserwellen 11 auf. Die Fräserwellen 11 und der Antriebsmotor 10 sind über Zahnriemen 12 miteinander verbunden. Die Fräserwellen 11 stehen orthogonal zu der zu bearbeitenden Oberfläche des Werkstücks.

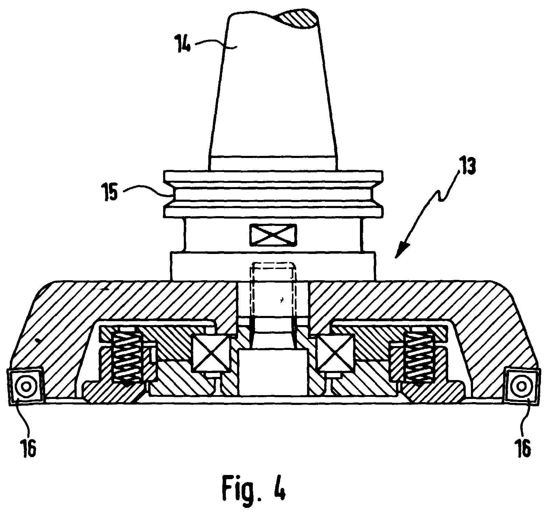

Die Figur 4 zeigt ein Fräswerkzeug 13, welches einen Spannkonus 14 für ein nicht näher dargestelltes Werkzeugspannsystem aufweist. Außerdem weist das Fräswerkzeug 13 eine umlaufende Nut 15 für einen Greifer einer automatischen Wechseleinrichtung auf. Die Stirnseite des Fräswerkzeugs 13 ist mit einer Vielzahl von Wendeblattmessern 16 versehen, die den Frässchnitt ausführen. Diese Wendeblattmesser 16 können mehrfach gewendet und einzeln positioniert werden.

Aus Figur 2 ist deutlich erkennbar, dass sich die Flugkreise 17 der Wendeblattmesser 16 in Transportrichtung 7 geringfügig überschneiden, so dass die Werkstückoberfläche absatzfrei bearbeitet werden kann. Außerdem ist aus Figur 2 deutlich erkennbar, dass die vier Fräserwellen 11 und somit auch die Fräswerkzeuge 13 in zwei quer zur Transportrichtung verlaufenden Linien 18 und 19 angeordnet sind. Mit dem Bezugszeichen 20 (Figur 3) ist ein Spannfutter eines Schnellspannsystems bezeichnet, in welches der Spannkonus 14 des Fräswerkzeugs 13 eingesetzt wird.

## Patentansprüche

1. Flächenschleifmaschine zur Oberflächenbearbeitung flächiger Werkstücke mit einem Werkstückeinlauf (4) und einem Werkstückauslauf (5), einem oder mehreren dazwischen angeordneten Schleifaggregaten (6) und einem Transportsystem (9), über welches das Werkstück am oder an den Schleifaggregaten (6) vorbeigeführt wird, **dadurch gekennzeichnet,** dass vor dem Werkstückeinlauf (4) eine Horizontal-Fräseinrichtung (8) angeordnet ist, die das Werkstück an der Seite bearbeitet, an welcher es anschließend geschliffen werden soll und die Fräseinrichtung (8) ein oder mehrere Horizontal-/Fräswerkzeuge (13) mit vertikal ausgerichteter Drehachse aufweist.

2. Maschine nach Anspruch 1, dadurch gekennzeichnet, dass bei mehreren Fräswerkzeugen (13) diese in wenigstens zwei quer zur Transportrichtung (7) des Werkstücks verlaufenden Linien (18, 19) angeordnet sind.

3. Maschine nach einem der vorhergehenden Ansprüche, dadurch gekennzeichnet, dass bei mehreren Fräswerkzeugen (13) deren Arbeitsbereiche sich in Transportrichtung (7) des Werkstücks geringfügig überlappen.

4. Maschine nach einem der vorhergehenden Ansprüche, dadurch gekennzeichnet, dass bei mehreren Fräswerkzeugen (13) diese über einen gemeinsamen Antriebsmotor (10) oder über separate, insbesondere einzeln ansteuerbare Antriebsmotoren angetrieben sind.

5. Maschine nach einem der vorhergehenden Ansprüche, dadurch gekennzeichnet, dass bei mehreren Fräswerkzeugen (13) diese über einen Zahnriemen (12) miteinander verbunden sind.

6. Maschine nach einem der vorhergehenden Ansprüche, dadurch gekennzeichnet, dass die Arbeitshöhe des bzw. der Fräswerkzeuge (13) jeweils separat einstellbar ist.

7. Maschine nach einem der vorhergehenden Ansprüche, dadurch gekennzeichnet, dass bei mehreren Fräswerkzeugen (13) diese einzeln zuschaltbar und separat auswechselbar sind.

8. Maschine nach einem der vorhergehenden Ansprüche, dadurch gekennzeichnet, dass die Fräswerkzeuge (13) mittels eines Schnellspannsystems mit dem Werkzeugfutter (20) von Fräserwellen (11) verbunden sind.

9. Maschine nach einem der vorhergehenden Ansprüche, dadurch gekennzeichnet, dass über das Transportsystem (9) das Werkstück durch die Fräseinrichtung (8) transportierbar ist.

10. Maschine nach einem der vorhergehenden Ansprüche, dadurch gekennzeichnet, dass die Fräseinrichtung (8) als Anbaumodul ausgebildet ist.
